# EUROPEAN PATENT APPLICATION

(11) **EP 2 927 853 A1**
(43) Date of publication of application: **07.10.2015**
(21) Application number: 15159196.3
(22) Date of filing: 16.03.2015
(51) Int. Cl.: G06Q 10/10

(54) **METHOD OF CAPTURING AND STRUCTURING INFORMATION FROM A MEETING**

(30) Priority: 04.04.2014 GB 201406070
(71) Applicant: AirbusGroup Limited, London WC2R 0AP (GB)
(72) Inventor: Hall, Mark John, Newport, NP10 8FZ (GB); Bermell-Garcia, Pablo, Newport, NP10 8FZ (GB); Hansen, Devon David, Newport, NP10 8FZ (GB); Quintana, Santiago, Newport, NP10 8FZ (GB)
(74) Representative: Ribeiro, James Michael

(57) **Abstract**

A computer-controlled method of capturing and structuring information from a meeting. Audio data is captured from a meeting with a microphone and stored. Information timestamps are stored indicating a time corresponding to a speaker utterance in the audio data. A diagram is generated and stored in accordance with a series of diagram inputs received from a human operator via an input device, the diagram having a plurality of nodes connected by links and each diagram input either creating, editing or deleting an associated one of the nodes or links. The diagram is displayed on a display device, the displayed diagram changing in response to the diagram inputs so that it has a plurality of intermediate forms during the meeting phase and a final form at the end of the meeting phase. One or more event timestamps are stored for each node or link, each event timestamp indicating a time of receipt of a diagram input which creates, edits or deletes the node or link.

## Description

### FIELD OF THE INVENTION

The present invention relates to a computer-controlled method of capturing and structuring information from a meeting, and a computer-controlled system programmed for performing such a method.

### BACKGROUND OF THE INVENTION

A diagram-based method of capturing an integrated design information space is described in Aurisicchio M, Bracewell R, 2013, Capturing an integrated design information space with a diagram-based approach, Journal of Engineering Design, Vol:24, ISSN:0954-4828, Pages:397-428 (hereinafter referred to as "Aurisicchio"). Various diagrams are described, each comprising a plurality of nodes connected by links.

Conventional methods of capturing information from a meeting include taking minutes (where detail and context is often lost), transcription, or a recording. A transcription and a recording do not apply any structure to the captured information and require a reviewer to watch/listen to the whole meeting to retrieve information.

### SUMMARY OF THE INVENTION

A first aspect of the invention provides a method according to claim 1. A further aspect of the invention provides a system according to claim 10.

The invention provides a computer-controlled method of capturing and structuring information from a meeting. Audio data is captured with one or more microphones and optionally also with one or more cameras. The information is then structured by storing information timestamps associated with the audio data, generating a diagram on the basis of diagram inputs which reflects the content of the meeting, and generating event timestamps associated with the diagram inputs. The diagram provides the means to structure the otherwise unstructured audio/text as a form of knowledge model, which describes what the audio/text means and where the data fits in the context of the overall meeting. The timestamps provide a means to enable a reviewer to use the diagram as a tool to find relevant parts of the meeting (i.e. to contextualise unstructured data) which are of interest to him without having to listen to the whole meeting, and also to extract information and knowledge from the discussion for future re-use.

Each information timestamp indicates a time associated with the audio data. For instance a stream of information timestamps may be generated automatically as the audio data is recorded. Alternatively the audio data is partitioned into distinct utterances, and each information timestamp is an utterance timestamp indicating a time of receipt of a respective utterance (for instance the beginning or end of the utterance).

The diagram is generated in accordance with a series of diagram inputs received from a human operator via an input device. These diagram inputs are typically received during the course of the meeting, the human operator being a participant in the meeting. Alternatively the diagram inputs may be received after the meeting, the human operator using the audio data to listen to what was said in the meeting and creating the diagram accordingly.

Each event timestamp indicates a time associated with a diagram input which creates, edits or deletes the node or link. If the diagram inputs are received during the course of the meeting, then each event timestamp may indicate a real time of receipt of an associated diagram input. If the diagram inputs are received after the meeting, then each event timestamp may indicate a virtual time of receipt of an associated diagram input within the virtual timeframe of the meeting being played back to the human operator.

The diagram may comprise one of the diagrams described in Aurisicchio, or any other diagram comprising a plurality of nodes connected by links.

Various preferred but non-essential features of the invention are set out in the dependent claims.

### BRIEF DESCRIPTION OF THE DRAWINGS

Embodiments of the invention will now be described with reference to the accompanying drawings, in which:
Figure 1 illustrates a computer-controlled system for capturing, structuring and retrieving knowledge from a meeting;
Figure 2 is an instance of a diagram;
Figure 3 shows a graphical user interface of a review tool;
Figure 4 shows a series of intermediate forms of the diagram of Figure 2; and
Figures 5-8 show various instances of the text transcript pane.

### DETAILED DESCRIPTION OF EMBODIMENT(S)

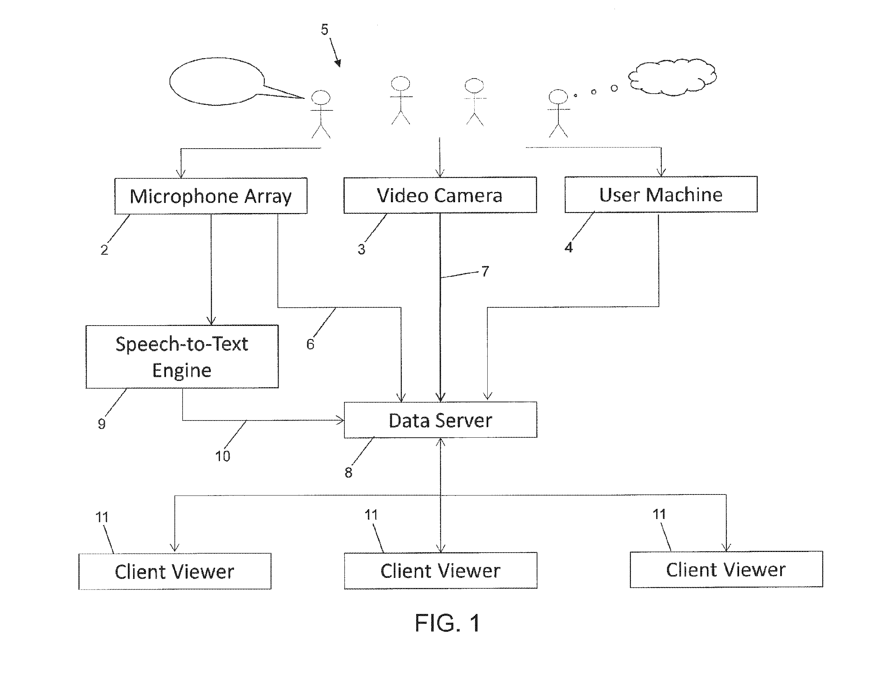

Figure 1 illustrates a computer-controlled system programmed for capturing, structuring and retrieving knowledge from a meeting. The system comprises a microphone array 2, a video camera 3 and a user machine 4. The user machine may be for example a touch-screen tablet computer or any other input device such as a keyboard. In a meeting phase, the microphones 2 and video camera 3 are operated to capture audio and video data from the meeting, which involves a plurality of human meeting participants 5. Audio data 6 and video data 7 are stored on a data server 8.

A speech-to-text engine 9 is programmed to automatically convert the audio data 6 captured by the microphone array 2 into text data 10 which provides a text transcription of the audio data 6 which is also stored on the data server 8. This automatic text conversion may be performed in real-time during the meeting phase, or after the meeting.

The engine 9 not only converts the audio data 6 into text, but also automatically partitions the text data 10 into distinct blocks or "utterances", each utterance containing text from only a single one of the participants 5. The engine 9 generates and stores in the server 8 a single information timestamp for each utterance, indicating a time of receipt of the start of the utterance. An information timestamp associated with an utterance is referred to below as an "utterance timestamp".

The speech-to-text engine 9 uses a speaker diarisation technique which enables each utterance to be attributed to a single one of the participants 5. This can be done through the use beamforming techniques, as described for example in WO-A-2013/132216 and Zwyssig et al (On the effect of snr and superdirective beamforming in speaker diarisation in meetings, Erich Zwyssig, Steve Renals and Mike Lincoln, ICASSP, page 4177-4180. IEEE, (2012*)).* Each utterance starts when a new participant starts to speak, and ends when another participant starts to speak.

In an alternative embodiment, the text transcription and partitioning of the text data into utterances may be performed manually by a human (rather than automatically by the engine 9) either during or after the meeting phase.

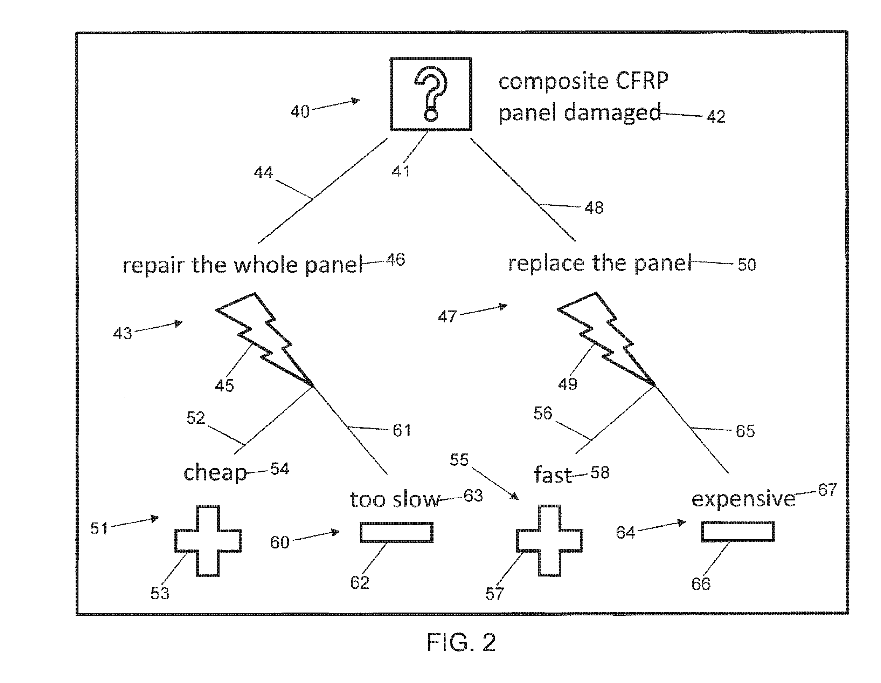

One, or possibly more than one, of the human participants 5 acts as a draftsman, providing diagram inputs to the user machine 4 during the course of the meeting in order to generate a diagram reflecting the issues discussed in the meeting. The diagram is generated by the user machine 4, stored in the server 8, and displayed on client viewers 11 as it is created during the meeting. An example of a diagram is shown in Figure 2. The diagram comprises a plurality of nodes connected by links. Each diagram input into the user machine 4 either creates, edits or deletes an associated one of the nodes or links. An edit input may for example rename a node, move a node, re-size a node, associate a node with another node (i.e. creating a link to the other node), disassociate a node with another node (i.e. deleting a link to the other node), etc.

The diagram displayed by the data server on the client viewers 11 changes during the course of the meeting phase in response to the diagram inputs to the user machine 4 so that it has a plurality of intermediate forms and a final form. The snapshot shown in Figure 2 shows the diagram in an intermediate form in which seven nodes have been created. Whenever the user machine 4 receives a diagram input which creates or edits a node, it generates an event timestamp indicating the time of the diagram input. When this occurs, a snapshot of the diagram is recorded in its current state which corresponds to the event timestamp.

Node 40 is a "problem" node with a graphic element 41 (indicating that the node is a "problem" node) and a text element 42. Node 43 is connected to node 40 by a link 44. Node 43 is a "solution" node with a graphic element 45 (indicating that the node is a "solution" node) and a text element 46. Node 47 is connected to node 40 by a link 48. Node 47 is also "solution" node with a graphic element 49 (indicating that the node is a "solution" node) and a text element 50.

Node 51 is a "pro" node indicating an advantage associated with the solution node 43, to which it is connected by a link 52. Node 51 has a graphic element 53 (indicating that the node is a "pro" node) and a text element 54. Node 55 is a "pro" node indicating an advantage associated with the solution node 47, to which it is connected by a link 56. Node 55 has a graphic element 57 (indicating that the node is a "pro" node) and a text element 58.

Node 60 is a "con" node indicating a disadvantage associated with the solution node 43, to which it is connected by a link 61. Node 60 has a graphic element 62 (indicating that the node is a "con" node) and a text element 63. Node 64 is a "con" node indicating a disadvantage associated with the solution node 47, to which it is connected by a link 65. Node 64 has a graphic element 66 (indicating that the node is a "con" node) and a text element 67.

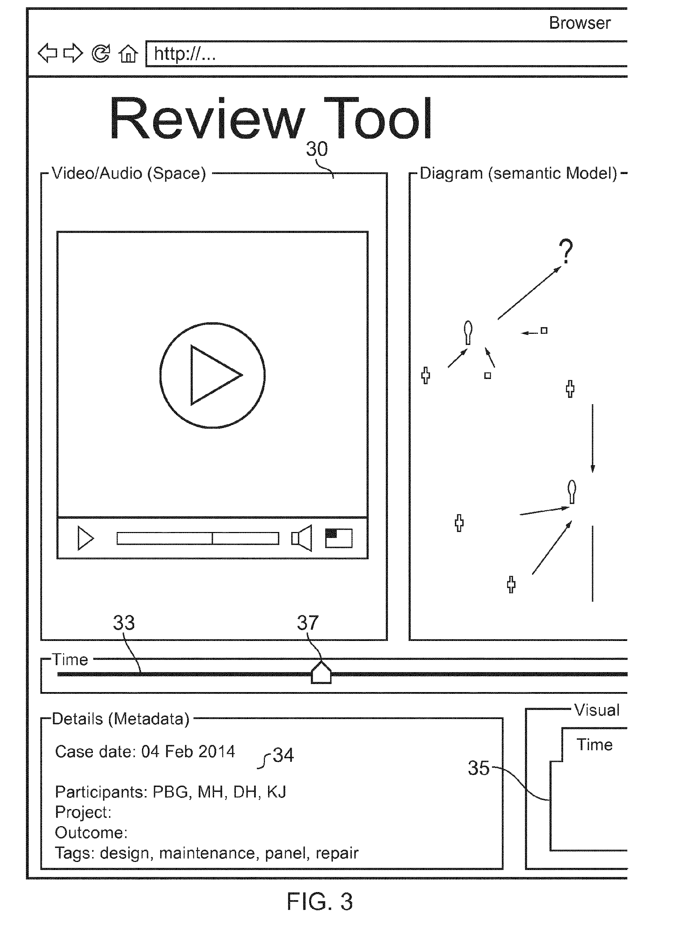

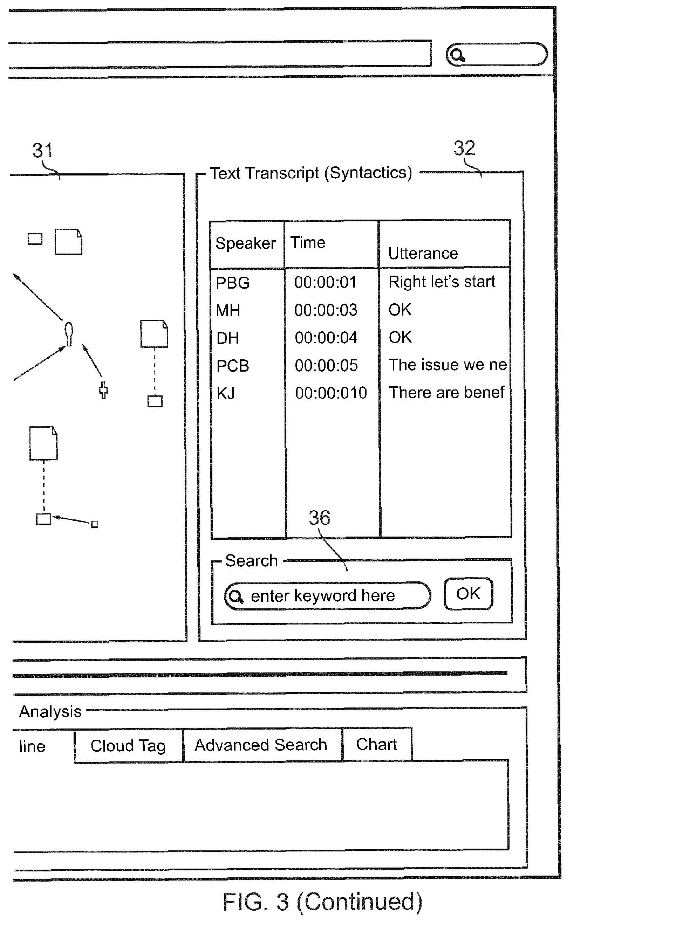

In a retrieval phase after the meeting phase, a review tool shown in Figure 3 is presented via one (or all) of the client viewers 11. The review tool has a video/audio pane 30, a diagram pane 31 and a text transcript pane 32. It also has a scroll bar 33, a metadata pane 34, a visual analysis pane 35 and a search pane 36. Each client viewer 11 includes a display screen for displaying the review tool of Figure 3, and a loudspeaker for playing back stored audio data from the meeting as described below.

The scroll bar 33 has a slider 37 which can be moved by a user up and down the scroll bar in order to move in time to a particular point in the virtual timeframe of the meeting. The diagram snapshot that is shown for that point in time is synchronised with the audio/video playback and the display of the speech transcription. In Figure 3 the slider 37 is shown at a position approximately 30% of the way through the meeting. At this point in time the diagram has the intermediate form shown in the diagram pane 31, with approximately thirteen nodes. Figure 2 shows the diagram pane 31 at an earlier point in the meeting, in this case with seven nodes.

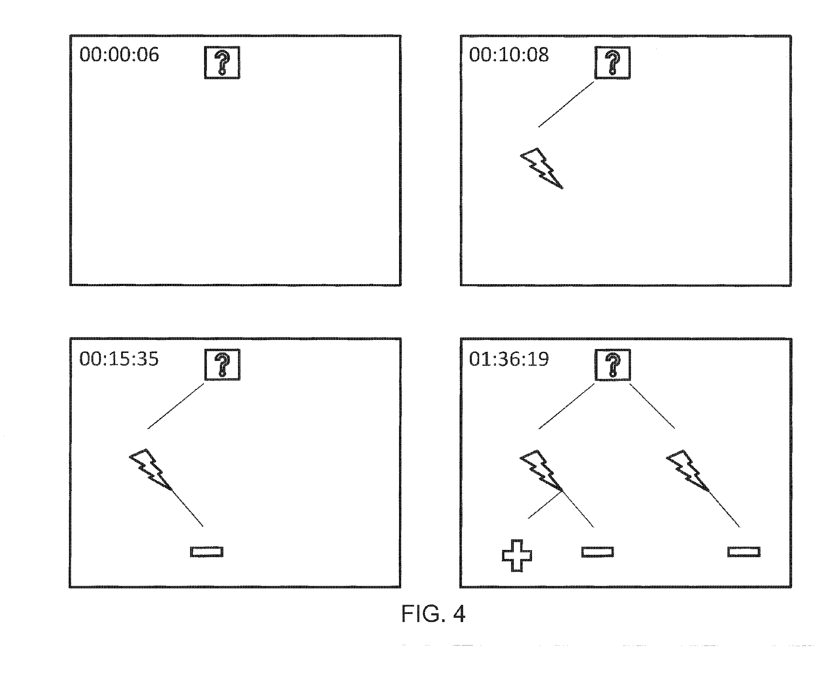

During the course of the meeting, the diagram evolves through various forms, and Figure 4 gives some simple examples. At time 00:00:06 the node 40 is created, at time 00:10:08 the node 43 is created, at time 00:15:35 the node 60 is created, and at time 01:36:19 the node 64 is created.

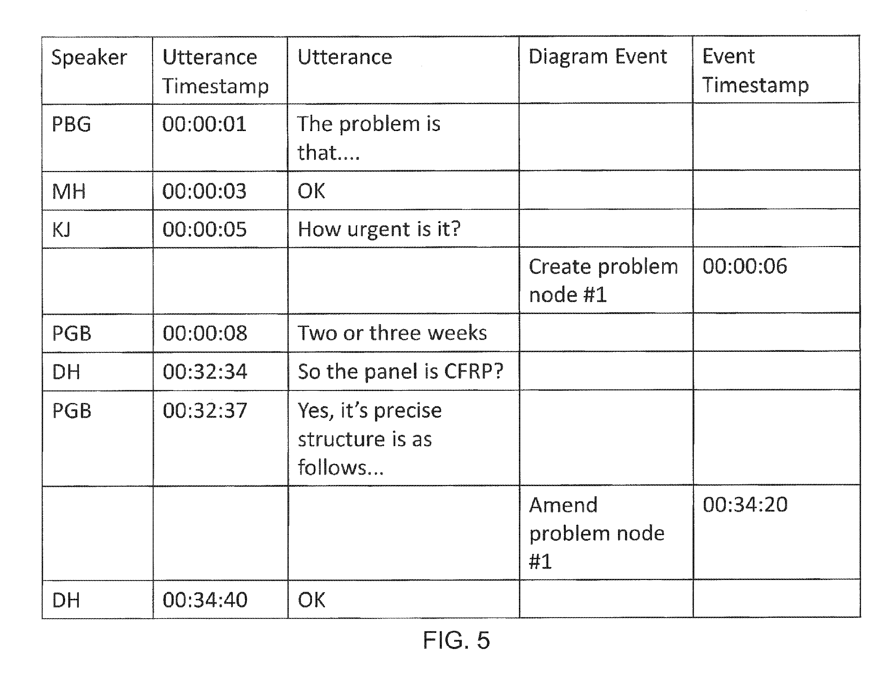

The text transcript pane 32 displays text to a human reviewer via the client viewer 11 in a manner which will now be described in further detail with reference to Figures 5-7.

If the reviewer is interested in the problem node 40 then he selects that node by clicking on it via the diagram pane 31, and the text transcript pane is updated as shown in Figure 5 in response to the click. This text transcript pane displays extracts of stored text from utterances with an utterance timestamp close in time to the event timestamps of the selected node 40.

The node 40 has two diagram inputs associated with it: a creation event with an event timestamp of 00:00:06, and an edit event with an event timestamp of 00:34:20. The text transcript pane 32 shown in Figure 5 displays extracts of the text of three utterances with utterance timestamps immediately preceding the event timestamp 00:00:06 of the creation event, and one utterance with a timestamp immediately following the event timestamp 00:00:06 of the creation event. The text transcript pane also displays extracts of the text of two utterances with utterance timestamps immediately preceding the event timestamp 00:34:20 of the edit event, and one utterance with a timestamp immediately following the event timestamp 00:34:20 of the edit event.

The displayed text only gives the reviewer a rough idea of the utterances since it only displays an extract of the text from the utterance. If the reviewer is interested in more information about the node, then he can either click on a selected one of the utterances displayed in the text transcript pane 32 (to be presented with a full transcript of the selected utterance via the pane 32, and/or a video recording of that utterance via the video/audio pane 30, and/or an audio recording of that utterance via the loudspeaker) or he can click a play button 38 on the video/audio pane 30. If he clicks the play button 38 then the video/audio pane 30 sequentially outputs the video data 7 and/or the audio data 6 associated with all seven utterances shown in Figure 5.

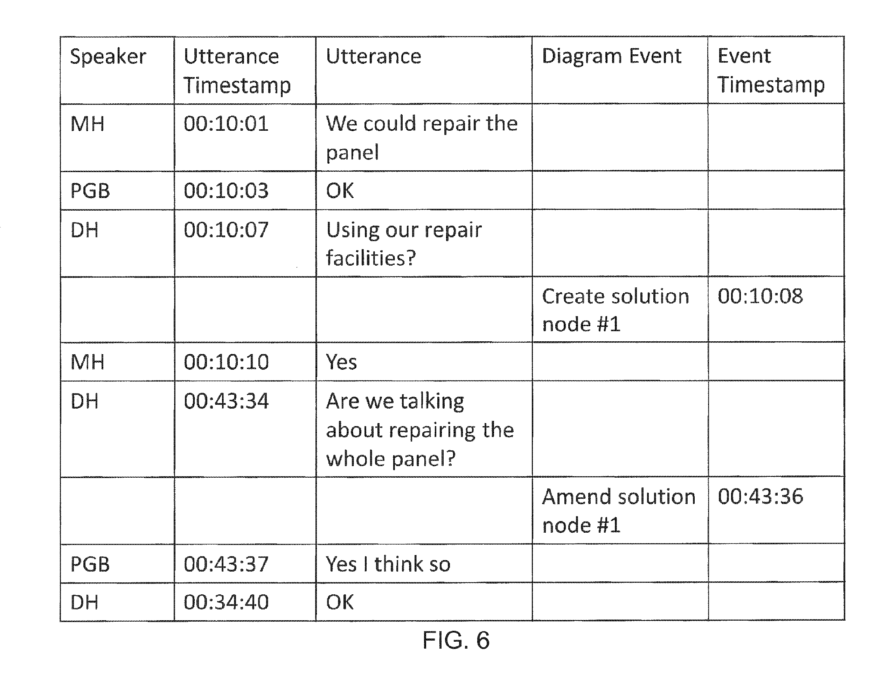

If the reviewer is interested in the solution node 46 then he clicks on that node and is then presented with the text transcript pane shown in Figure 6 in response to the click. The node has two diagram inputs associated with it: a creation event with an event timestamp of 00:10:08, and an edit event with an event timestamp of 00:43:36. The text transcript pane 32 displays extracts of the text of three utterances with timestamps immediately preceding the event timestamp 00:10:08 of the creation event, and one utterance with a timestamp immediately following the event timestamp 00:10:08 of the creation event. The text transcript pane also displays extracts of the text of one utterance with a timestamp immediately preceding the event timestamp 00:43:36 of the edit event, and two utterances with a timestamp immediately following the event timestamp 00:43:36 of the edit event.

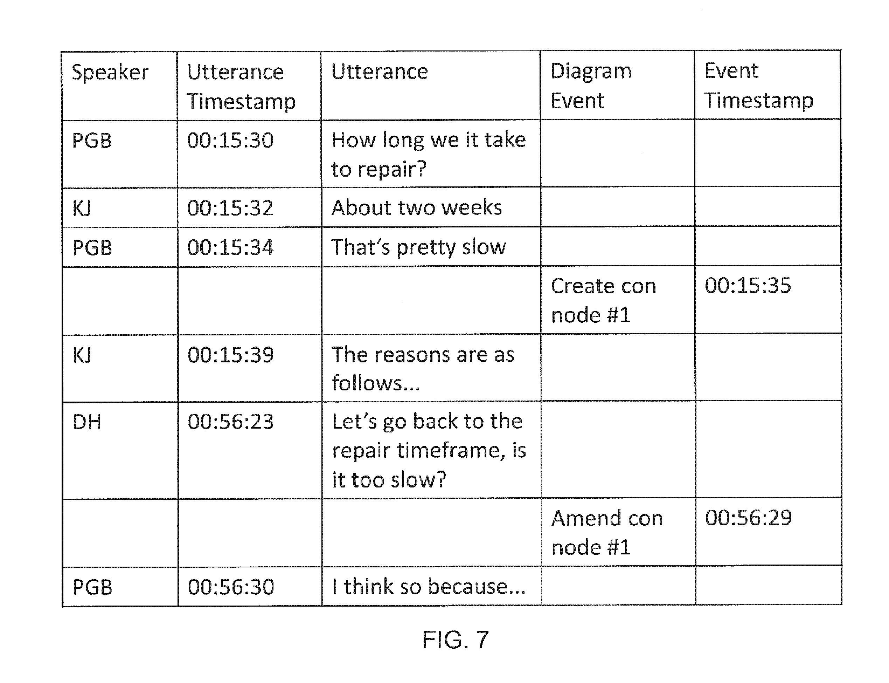

If the reviewer is interested in the "con" node 60 then he clicks on that node and is presented with the text transcript pane shown in Figure 7 in response to the click. The node has two diagram inputs associated with it: a creation event with an event timestamp of 00:15:35, and an edit event with an event timestamp of 00:56:29. The text transcript pane 32 displays extracts of the text of three utterances with timestamps immediately preceding the event timestamp 00:15:35 of the creation event, and one utterance with a timestamp immediately following the event timestamp 00:15:35 of the creation event. The text transcript pane also displays extracts of the text of one utterance with a timestamp immediately preceding the event timestamp 00:43:36 of the edit event, and one utterance with a timestamp immediately following the event timestamp 00:56:29 of the edit event.

Thus the review tool of Figure 3 outputs one or more utterance (in text, video or audio format) which has an utterance timestamp close in time to an event timestamp of a selected one of the nodes. Note that the number of utterances presented via the text transcript pane 32 can vary as shown in Figures 5-7, and the reviewer may be able to control this. For instance the reviewer may request that for problem creation events he is presented with three preceding utterances and one following utterance; for problem edit events he is presented with two preceding utterances and one following utterance; and so on. Alternatively, rather than specifying the number of utterances, the user may instead specify that for problem creation events he is presented with any utterance with an utterance timestamp falling within a predetermined time period (for instance one minute) preceding the event timestamp of a problem creation event, and/or any utterance with an utterance timestamp falling within a predetermined time period (for instance thirty seconds) after the event timestamp of a problem creation event. Alternatively, rather than presenting only the utterances in and around the time of interest, the whole transcript could be shown with the time of interest highlighted. This would present the transcript as a whole, but the view would be centred on the time of interest, or the relevant time highlighted, enabling the user to scroll up and down to see all of the conversation before and after the diagram event.

In the examples given above a reviewer has clicked on a node to be presented with information associated that node. Alternatively the reviewer can click on a link to be presented with information associated with that link.

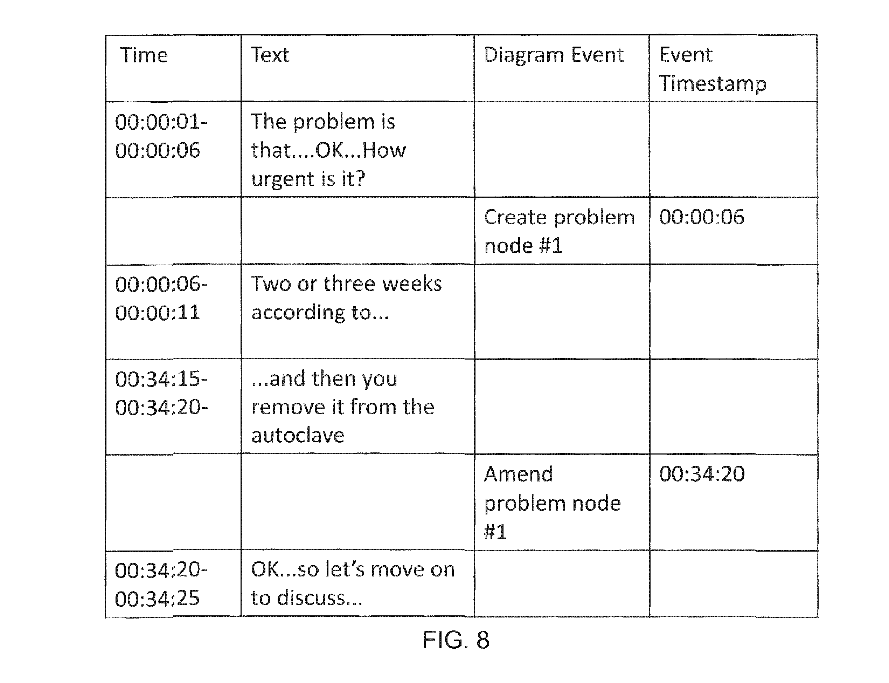

Figure 8 illustrates an alternative method of presenting text via the text transcript pane 32. In this case the engine 9 does not partition the text into distinct blocks or "utterances" but rather stores the text as a continuous stream of words, each word having an associated automatically generated information timestamp which will be referred to below as a "word timestamp".

If the reviewer is interested in the problem node 40 then he clicks on that node and is presented with the text transcript pane shown in Figure 8 in response to the click. As with Figure 5, the node has two diagram inputs associated with it: a creation event with an event timestamp of 00:00:06, and an edit event with an event timestamp of 00:34:20. The text transcript pane 32 displays any text with a word timestamp in the five seconds immediately preceding and following the event timestamp 00:00:06 of the creation event. The text transcript pane also displays extracts of any text with a word timestamp in the five seconds immediately preceding and following the event timestamp 00:34:20 of the edit event.

The displayed text may only give the reviewer a rough idea of the speech, and if he is interested in more information about the node, then he can either click on one of the text boxes displayed in the text transcript pane 32 (to be presented with a full transcript of that five second section of text via the pane 32 and/or or a video of that five second section via the video/audio pane 30) or he can click a play button 38 on the video/audio pane 30. If he clicks the play button 38 then the video/audio pane 30 sequentially displays the video data and audio data associated with all twenty seconds shown in Figure 5.

Another way of utilising the review tool is to move the slide bar 37 to the right so that the diagram displayed in the diagram pane 31 follows a sequence of intermediate forms of the diagram as shown in Figure 4. At the same time, the text transcript pane 32 is rapidly updated with the text close in time to the current point of the slide bar 37. When the diagram has reached a point of interest to the reviewer, then he selects the current point in time by lifting his finger off the slide bar 37. The diagram in the diagram pane 31 and the text in the text transcript pane 32 is then frozen at that selected point in time.

The text transcript pane 32 now displays utterances with utterance timestamps close to the selected point in time. For instance Figure 3 gives an example where the slide bar 37 has been frozen at time 00:00:05, and the text transcript pane 32 is displaying utterances with utterance timestamps within five seconds of that point in time.

In the example above the reviewer has selected a point in time by using the slider 37, rather than selecting a node. Alternatively the reviewer can use the slide bar 37 to select a node rather than a point in time as follows. If the slide bar 37 is frozen at a point in time after the "con" node 60 has been created or edited but before the next diagram input, then the reviewer is deemed to have selected the currently displayed intermediate form of the diagram (and the "con" node 60 which is associated with it). So rather than displaying a transcript pane associated with a selected point in time, the transcript pane 32 instead displays all utterances associated with that selected "con" node 60 as shown in Figure 7.

Although the invention has been described above with reference to one or more preferred embodiments, it will be appreciated that various changes or modifications may be made without departing from the scope of the invention as defined in the appended claims.

## Claims

1. A computer-controlled method of capturing and structuring information from a meeting, the method comprising: capturing audio data from a meeting with a microphone; storing the audio data; storing information timestamps each indicating a time associated with the audio data; generating and storing a diagram in accordance with a series of diagram inputs received from a human operator via an input device, the diagram comprising a plurality of nodes connected by links and each diagram input either creating, editing or deleting an associated one of the nodes or links; displaying the diagram on a display device, the displayed diagram changing in response to the diagram inputs so that it has a plurality of intermediate forms during the meeting phase and a final form at the end of the meeting phase; and storing one or more event timestamps for each node or link, each event timestamp indicating a time associated with a diagram input which creates, edits or deletes the node or link.

2. A computer-controlled method of capturing, structuring and retrieving information from a meeting, the method comprising:
in a meeting phase, capturing and structuring information from a meeting by the method of claim 1; and
in a retrieval phase after the meeting phase, either:
a. displaying to a human reviewer the diagram in its final form or one of its intermediate forms; receiving from the human reviewer an indication of a selected one of the nodes or links in the diagram displayed to the human reviewer, the selected one of the nodes or links having at least one selected event timestamp; and in response to the indication, outputting to the human reviewer stored audio data or a text transcription of the audio data with an information timestamp which is close in time to the selected event timestamp; or
b. displaying to a human reviewer the diagram in a series of its intermediate forms each associated with a respective event timestamp; receiving from the human reviewer an indication of a selected point in time or an indication of a selected one of the series of intermediate forms of the diagram displayed to the human reviewer, the selected one of the series having at least one selected event timestamp; and in response to the indication outputting to the human reviewer stored audio data or a text transcription of the audio data with an information timestamp which is close in time to the selected point in time or the selected event timestamp.

3. A method according to claim 1 or 2, further comprising partitioning the stored audio data into distinct utterances, wherein each information timestamp is an utterance timestamp indicating a time of receipt of a respective utterance; and in response to the indication outputting to the human reviewer stored audio data or a text transcription of the audio data with an utterance timestamp which is close in time to the selected point in time or the selected event timestamp.

4. A method according to claim 3, comprising in response to the indication outputting to the human reviewer stored audio data or a text transcription of the audio data for a pair of utterances with utterance timestamps which immediately precede and immediately follow the selected point in time or the selected event timestamp.

5. A method according to claim 2, 3 or 4, comprising in response to the indication outputting to the human reviewer stored audio data or a text transcription of the audio data which has an information timestamp falling within a predetermined time period preceding the selected point in time or the selected event timestamp.

6. A method according to any of claims 2 to 5, comprising in response to the indication outputting to the human reviewer stored audio data or a text transcription of the audio data which has an information timestamp falling within a predetermined time period following the selected point in time or the selected event timestamp.

7. A method according to any of claims 2 to 6, comprising performing option a. of claim 2 in the retrieval phase after the meeting phase.

8. A method according to any of claims 2 to 6, comprising performing option b. of claim 2 in the retrieval phase after the meeting phase.

9. A method according to any preceding claim, further comprising converting the audio data into a text transcription of the audio data with a speech-to-text engine, and storing the text transcription of the audio data.

10. A computer-controlled system programmed to perform a method according to any preceding claim, the system comprising a microphone; a data server for storing audio data from the microphone and information timestamps each indicating a time associated with the audio data; an input device for receiving a series of diagram inputs from a human operator, wherein the system is programmed to generate a diagram comprising a plurality of nodes connected by links, each diagram input either creating, editing or deleting an associated one of the nodes or links; a display device for displaying the diagram, the displayed diagram changing in response to the diagram inputs so that it has a plurality of intermediate forms during the meeting phase and a final form at the end of the meeting phase; wherein the system is further programmed to store one or more event timestamps for each node or link, each event timestamp indicating a time associated with a diagram input which creates, edits or deletes the node or link.
